**Europäisches Patentamt**

**European Patent Office**

**Office européen des brevets**

(19)

(11) Veröffentlichungsnummer: **0 034 331**
**B1**

(12) # EUROPÄISCHE PATENTSCHRIFT

(45) Veröffentlichungstag der Patentschrift:
**14.11.84**

(51) Int. Cl.³: **C 08 F 8/44**, C 09 K 3/10,
C 09 J 3/00 // C08F20/02

(21) Anmeldenummer: **81100958.8**

(22) Anmeldetag: **11.02.81**

(54) Gel auf der Basis wasserlöslicher Poly(meth)acrylsäure-Derivate, Verfahren zu seiner Herstellung und seine Anwendung.

(30) Priorität: **14.02.80 DE 3005446**

(43) Veröffentlichungstag der Anmeldung:
**26.08.81 Patentblatt 81/34**

(45) Bekanntmachung des Hinweises auf die Patenterteilung:
**14.11.84 Patentblatt 84/46**

(84) Benannte Vertragsstaaten:
**AT BE CH DE FR GB IT LI LU NL SE**

(56) Entgegenhaltungen:
**US - A - 4 018 286**

(73) Patentinhaber: **Chemische Fabrik Stockhausen GmbH,
Bäkerpfad 25, D-4150 Krefeld (DE)**

(72) Erfinder: **Hübner, Wolfgang, Dipl.Chem. Dr.,
Möhlenring 61, D-4152 Kempen 1 (DE)**
Erfinder: **Fischer, Werner, Chem.Ing.grad.,
Lützowstrasse 14, D-4150 Krefeld 1 (DE)**
Erfinder: **Konopka, Norbert, Einsteinstrasse 22,
D-4130 Moers 1 (DE)**

(74) Vertreter: **Klöpsch, Gerald, Dr.-Ing., An Gross St.
Martin 6, D-5000 Köln 1 (DE)**

## Beschreibung

Die Erfindung betrifft ein stabiles, standfestes, wasserhaltiges Gel, seine Herstellung und seine Verwendung zur Abdichtung oder Verfestigung von durchlässigen festen Materialien.

Gele auf der Basis wasserlöslicher Polymerisate sollen in Erdformationen eine Abdichtung gegen Zu- oder Abflüsse von Flüssigkeiten (und/oder Gasen) bzw. eine mechanische Stabilisierung der Erdformation bewirken. Die Erdformationen sind unterschiedlich ausgebildet, wobei klüftige, mit mehr oder weniger grossen Hohlräumen durchsetzte Formationen anderen ohne Störungen ausgebildeten dichten und feinporösen Schichten mit geringem Porenvolumen gegenüberstehen. In der Lagerstättentechnik sollen insbesondere oft Formationen des dichten Typs im Zuge der Produktionsverbesserung mit Gelen behandelt werden. Andererseits besteht in der Bautechnik die Aufgabenstellung, u.a. feinsandige Bodenschichten abzudichten und/oder zu verfestigen.

Die bisherigen Verfahrensweisen hierzu beschreiben u. a. den Einsatz wasserlöslicher Polymerisate, die in Form von wässrigen Lösungen von mehrwertigen Metallsalzen zum Vergelen gebracht werden.

Es ist bekannt, Gele aus wasserlöslichen Polyacrylsäurederivaten und Copolymerisaten allein oder in Verbindung mit halbsynthetischen Carboxyalkylcellulosen (s. hierzu beispielsweise US 3 971 440, US 4 018 286 und US 4 043 921) herzustellen.

Die Gelbildung wird erreicht durch Reaktion des im Wasser gelösten Polymerisats mit mehrwertigen Metallionen, wobei eine bevorzugte Methode die Reduktion von $CrO_4^{2-}$ zu $Cr^{3+}$ ist, das in «statu nascendi» die wasserlöslichen Polymerisate in schwerlösliche Gele umwandelt. Die Bildung der Gele erfolgt je nach Wahl geeigneter Reduktionsmittel und in Abhängigkeit vom pH-Wert des Reaktionsmediums direkt oder verzögert.

Um wirksam zu sein, müssen die vergelenden Komponenten, d. h. die wässrigen Lösungen des Polymerisats und der Metallsalze oder die sich bildenden Gele in die Formation eindringen, wobei aus der Strömungsmechanik bekannt ist, dass beim Durchströmen von Sickerkörpern eine starke Vergrösserung des Widerstands auftritt und hochmolekulare Polymerisate z. B. Polyacrylamide nicht nur die Energieverluste einer Sickerströmung vergrössern, sondern auch die Durchsatzgeschwindigkeit der Flüssigkeit verringern. (Lit. E. Naudascher, «Wasserwirtschaft» 62 (1962): «Beeinflussung strömungstechnischer Vorgänge durch Additive»).

Es ist deshalb schwierig, hochviskose Lösungen von wasserlöslichen Polymerisaten, deren Lösungsviskosität konzentrationsabhängig ist und mit zunehmender Konzentration stark ansteigt, einzusetzen.

Gemäss US-PS 4 018 286 werden deshalb beispielsweise maximal 1%ige Polymerisatlösungen verwendet, was auch dem Vorgehen in der Praxis entspricht, um mit verpumpbaren Flüssigkeiten arbeiten zu können, wobei die Lösungsviskositäten solcher hochmolekularer Polymerisate bei 1%iger Konzentration in Wasser schon bei 1000–1600 mPa.s liegen. Andererseits zeigen diese stark wasserhaltigen Gele oft nicht die gewünschte Beständigkeit und Festigkeit in der Formation, so dass sie beispielsweise aus unter Druck stehenden Formationen infolge mangelnder mechanischer Festigkeit wieder ausgepresst werden können.

Die Herstellung dieser Gele erfolgt durch Zusatz mehrwertiger u.z.T. amphoterer Metallionen, wie z. B. $Al^{3+}$, und wird über die Regulierung des pH-Wertes im Medium reversibel beeinflusst. Die nach US-PS 4 018 286 mit $Al^{3+}$-Ionen hergestellten Gele erwiesen sich jedoch als zu instabil. Ausserdem ist die Behandlung des Gels mit weiteren Chemikalien in dieser Weise zu aufwendig und zeitraubend.

Wässrige Gele mit höheren Festigkeiten werden aus niedrigmolekularen Polymerisaten erhalten; jedoch besitzen auch hier die Lösungen bei den erforderlichen höheren Polymerisatgehalten zu hohe Viskositätswerte.

Weiterhin ist insbesondere der Einsatz von Cr-Salzen in vielen Anwendungsbereichen aus biologischer Sicht bedenklich. Mit Fe-Salzen können aus der wässrigen Polymerisatlösung oft keine kompakten homogenen Gele erzeugt werden, da schon beim Mischen der Lösungen anionischer wirksamer Polyacrylamide Reaktion an der Phasengrenze der Lösungstropfen unter Bildung unlöslicher Verbindungen eintritt, welche die weitere Reaktion zum homogenen mechanisch stabilen Gel unterbricht.

Ein anderes Verfahren zur Herstellung von Gelen auf der Basis wasserlöslicher Polymerisate beruht auf der Verwendung von Lösungen entsprechender wasserlöslicher Monomerer, z. B. Acrylamid. Die 5–10%igen Monomerlösungen werden hierbei nach Zusatz von Inhibitor- und Katalysatorkomponenten polymerisiert, wobei durch geringe Konzentrationen mehrfach funktioneller Monomerer (beispielsweise Methylenbisacrylamid) in der Lösung eine gleichzeitige Vernetzung und Gelbildung erreicht wird.

Dieses Verfahren ist im Prinzip sehr einfach und in vielen Bereichen wirkungsvoll eingesetzt worden. Es bietet insbesondere bei der Injektion in dichte Erdformationen durch die Handhabung gering viskoser Lösungen Vorteile, ist aber auch mit deutlichen Nachteilen behaftet:

1. Die zur Gelbildung führende Polymerisation ist bekanntermassen eine in bezug auf die Reaktionsbedingungen, z. B. Monomerenkonzentration und Temperatur, insbesondere aber gegenüber Verunreinigungen im Reaktionsmedium sehr empfindliche Reaktion, die leicht inhibiert oder abgebrochen wird. So ist beispielsweise bekannt, dass für den Vorgang der Gelbildung auf diese Weise $Fe^{3+}$-Ionen oder $NaNO_2$ als Inhibitor wirken. Weiterhin kann eine Veränderung der Katalysatorkonzentration sowohl bei überschüssiger als auch bei zu geringer Konzentration einer Komponente des Katalysatorsystems, z. B. Ammoniumpersulfat, die Gelbildung verhindern.

Daraus ergeben sich Schwierigkeiten in den Anwendungsbereichen, wo die Gelbildung nicht direkt zu kontrollieren ist, z. B. im Bodenbereich.

Die Anwendung des Systems ist daher beim Einsatz zur Abdichtung von Wasserzuflüssen oder zur Verfestigung im grundwasserhaltigen Bodenbereich wegen der verbleibenden Monomermengen in ökologischer und wirtschaftlicher Sicht kritisch zu beurteilen. Es ist bekannt, dass in solchen Anwendungsfällen ein Verlust an Stabilisierungsflüssigkeit nur in einigen Fällen ganz auszuschliessen ist, während bei starker Verdünnung der Monomerenlösung unter ungünstigen Bedingungen die Stabilisierung zumindest unvollständig abläuft, d. h. ein Teil der monomeren Stabilisierungsflüssigkeit im Wasser gelöst frei verbleibt und ausserdem schwache Gele gebildet werden, deren Eigenschaften nicht zu verbessern sind.

Hinzu kommt,

2. dass sowohl der Umgang mit trockenen Acrylamid-Monomeren (Einatmung toxischer Staubteilchen), wie auch mit anderen Komponenten des Systems (Dimethylaminopropionnitril wirkt ätzend, Persulfate wirken stark oxidierend) erhebliche Vorsichtsmassnahmen erfordert.

Aufgabe der Erfindung ist daher die Schaffung eines Gels, das einfach herzustellen ist, rasch und zuverlässig in die Hohlräume von Erdformationen oder Bauteilen eindringt und diese Hohlräume flüssigkeits- und gasdicht verschliesst und dabei gleichzeitig ausreichend mechanisch und chemisch stabil ist, um grösseren mechanischen Belastungen und chemischen Einflüssen, z. B. durch Salzwasser, standzuhalten.

Diese Aufgabe wird erfindungsgemäss durch neue Polymerisat-Gele gelöst, die aus Reaktionsprodukten von wasserlöslichen Polymerisaten auf der Basis von Poly(meth)acrylsäure-Derivaten und mehrwertigen Metallsalzen bestehen, wobei es sich entweder um Reaktionsprodukte einer W/Ö-Dispersion des wasserlöslichen Polymerisats mit einer wässrigen Lösung des Metallsalzes oder um das Reaktionsprodukt einer wässrigen Polymerisat-Lösung mit einer W/Ö-Emulsion des Metallsalzes handelt.

Gegenstand der Erfindung ist daher ein Gel, das aus den Reaktionsprodukten von wasserlöslichen Polymerisaten auf der Basis von Poly(meth)acrylsäure-Derivaten und mehrwertigen Metallsalzen besteht, das dadurch gekennzeichnet ist, dass es entweder

a) die Reaktionsprodukte von als W/Ö-Dispersion vorliegender wasserlöslicher Polymerisate mit wässrigen Lösungen der Metallsalze oder

b) die Reaktionsprodukte von wässrigen Lösungen der Polymerisate mit einer W/Ö-Emulsion der Metallsalze enthält.

Besteht das erfindungsgemässe Gel aus dem Reaktionsprodukt einer W/Ö-Dispersion des wasserlöslichen Polymerisats und einer wässrigen Metallsalzlösung, so liegt diesem Gel bevorzugt ein W/Ö-Dispersions-Polymerisat zugrunde, das gleich von der Herstellung her als W/Ö-Dispersion anfällt und nicht erst nachträglich gelöst und/oder dispergiert zu werden braucht.

Die verwendeten W/Ö-Polymerisat-Dispersionen sind bekannt. Ein Verfahren zur Herstellung dieser Polymerisate ist beispielsweise in der DE-PS 1 089 173 beschrieben.

Hierbei werden äthylenisch ungesättigte Monomere, die in einer wässrigen Phase vorliegen, in einer äusseren Ölphase dispergiert zu einer W/Ö-Emulsion und der radikalischen Polymerisation unterworfen. Geeignete wasserlösliche Monomere sind beispielsweise Acrylsäure, Methacrylsäure (oder Itaconsäure) sowie Derivate dieser Carbonsäuren, beispielsweise Acrylamid und Methacrylamid oder die Salze und wasserlöslichen Ester der Carbonsäuren, z. B. Dimethylaminoäthyl(meth)acrylat sowie die Derivate dieser Carbonsäuren mit quartärem Stickstoff, wobei diese Monomeren allein oder in Mischung copolymerisiert werden können. Weiter können die Polymerisate zu geringen Anteilen (von etwa 0,1 bis 10 Gew.% bezogen auf die Summe aller Monomer-Bestandteile) auch aus nur begrenzt wasserlöslichen äthylenischen Verbindungen als hydrophobe Monomereinheiten, wie wasserunlösliche Acrylsäure- oder Methacrylsäureester, Vinylacetat, Vinylpyrrolidon oder Acrylnitril sowie geringen Anteilen von zweifach äthylenisch ungesättigten Verbindungen wie beispielsweise Methylenbisacrylamid aufgebaut sein.

Durch den Zusatz von vernetzend wirkenden Monomeren wird die Wasserlöslichkeit des Polymerisats eingeschränkt, was in bestimmten Anwendungsfällen vorteilhaft sein kann.

Der Polymerisatanteil im Gel kann im Bereich zwischen 1 und 40%, vorzugsweise im Bereich zwischen 5 und 15%, liegen.

Der Polymerisatanteil im Gel beeinflusst die mechanischen Eigenschaften in der Weise, dass bei höheren Anteilen festere Gele erhalten werden.

Besteht das erfindungsgemässe Gel aus dem Reaktionsprodukt einer wässrigen Polymerisat-Lösung mit einer W/Ö-Emulsion, so liegen den Polymerisat-Lösungen die gleichen wasserlöslichen Polymerisate zugrunde wie den W/Ö-Polymerisat-Dispersionen.

In diesem Fall liegt der Polymerisat-Anteil im Gel bevorzugt im Bereich von 0,1 bis 40, insbesondere von 1 bis 30 Gew.%.

Als mehrwertige Metallsalze enthalten die erfindungsgemässen Gele $Al^{3+}$, $Ti^{3+}$, $Cr^{3+}$, $Fe^{2+}$, $Fe^{3+}$, $Ni^{2+}$, $Cu^{2+}$, $Sn^{2+}$, $La^{3+}$, $Ce^{4+}$, $Pb^{2+}$, $Hg^{2+}$, und/oder $UO_2^{2+}$, vorzugsweise $Al^{3+}$, $Ti^{3+}$, $Cr^{3+}$, $Fe^{2+}$ und/oder $Fe^{3+}$. Während bei den eingangs beschriebenen Polymerisationsverfahren des Standes der Technik $Fe^{3+}$-Ionen inhibierend wirken bzw. mit Fe-Ionen nur unbeständige, stark inhomogene Gele erhalten werden, werden $Fe^{3+}$-Ionen erfindungsgemäss als mehrwertiges Metallsalz bevorzugt. Neben mehrwertigen Metallen können danebem auch andere Salze von Alkali- oder Erdalkaliionen vorliegen.

Der Gehalt an mehrwertigen Metallsalzen im Gel liegt im Bereich von 0,1 bis 10, vorzugsweise von 0,1 bis 5 Gew.%.

Die erfindungsgemässen Gele können weiter Aktivatoren zur Phasenumkehr der W/Ö-Polymerisat-Dispersion in der Salzlösung bzw. der W/Ö-Emulsion des Metallsalzes enthalten. Als solche Aktivatoren werden Netzmittel mit hoher HLB-Zahl von bevorzugt > 10 (nach dem Atlas-HLB-System «Atlas-Chemie-GmbH») verwendet. Entsprechend angewandte Netzmittel sind in grosser Zahl bekannt und z. B. in der DE-AS 2 154 081 beschrieben. Beispiele für solche Netzmittel sind: anionische Netzmittel wie z. B. Alkalimetallseifen und Alkalimetallsalze von Alkyl-Arylsulfonsäuren, kationische Netzmittel wie z. B. Salze von langkettigen Aminen und nichtionogene Netzmittel, wie z. B. Kondensationsprodukte von Alkylphenol mit Ethylenoxid oder höheren Fettalkoholen mit Ethylenoxid.

Der Gehalt des Gels an Aktivator hängt von dessen Zusammensetzung und von der erwünschten Verzögerung der Gelbildung ab und liegt im Bereich von 0,5 bis 10, vorzugsweise von 0,5 bis 5 Gew.%.

Gegenstand der Erfindung ist ferner ein Verfahren zur Herstellung von Gelen aus wasserlöslichen Polymerisaten auf der Basis von Poly-(meth)acrylsäure-Derivaten und mehrwertigen Metallsalzen, das dadurch gekennzeichnet ist, dass man entweder

a) die wasserlöslichen Polymerisate in Form von W/Ö-Dispersionen mit wässrigen Lösungen der mehrwertigen Metallsalze oder

b) die wässrigen Lösungen der Polymerisate mit W/Ö-Emulsionen der Metallsalze

umsetzt.

Bevorzugt wird dabei ein Verfahren, das dadurch gekennzeichnet ist, dass man die Umsetzung in Gegenwart von Aktivatoren für die Phasenumkehr der W/Ö-Polymerisat-Dispersion bzw. W/Ö-Emulsion des Metallsalzes vornimmt.

Ebenfalls bevorzugt wird ein Verfahren, das dadurch gekennzeichnet ist, dass die Reaktionsteilnehmer vor der Umsetzung gegebenenfalls unter mechanischer Hilfe, vermischt werden.

Bevorzugt wird auch ein Verfahren, das dadurch gekennzeichnet ist, dass der Aktivator einer der beiden Reaktionskomponenten vor deren Mischung zugesetzt wird, er kann aber auch nach der Mischung der Reaktionskomponenten zugesetzt werden, was bei der Umsetzung einer wässrigen Polymerisat-Lösung mit einer W/Ö-Emulsion des mehrwertigen Metallsalzes bevorzugt wird.

Überraschenderweise wurde gefunden, dass die Phasenumkehr von Polymerisat-Dispersion bzw. W/Ö-Emulsion unter Reaktion des Polymerisats zu einem Gel durch das mehrwertige Metallsalz zunächst verzögert werden kann, so dass das Flüssigkeitsgemisch in der ersten Phase keinen wesentlichen Viskositätsanstieg zeigt, sondern leicht flüssig bleibt. In einer zeitlich mehr oder weniger stark zu verzögernden zweiten Phase erfolgt mit der spontan ohne weitere Hilfsmittel erfolgenden Phasenumkehr gleichzeitig die Bildung des Gels.

Die Verzögerung der Gelbildung kann

a) durch unterschiedliche Konzentration an mehrwertigem Metallsalz in der Lösung und/oder

b) durch die Art und Konzentration des Umkehr-Aktivators

gesteuert werden.

Eine sofortige Vergelung des Gemischs kann auch durch den Zusatz einer Base zu dem Gemisch der Reaktionskomponenten erreicht werden. Hierfür sind beliebige Basen geeignet. Die zur Vergelung notwendige Basenmenge ist abhängig von der Basizität bzw. Acidität der verwendeten Reaktionskomponenten.

Die zur Herstellung der erfindungsgemässen Gele verwendeten W/Ö-Dispersionen bzw. W/Ö-Emulsionen des Metallsalzes weisen als weitere Bestandteile eine Ölphase sowie einen Emulgator auf. Die ölige Phase wird aus hydrophoben Kohlenwasserstoffen, wie bestimmten flüssigen Kohlenwasserstoff-Fraktionen o. ä. synthetischen Produkten oder durch chlorierte Kohlenwasserstoffe gebildet. Als Emulgatoren oder Emulgatorgemische kommen solche mit niedriger HLB-Zahl ($<8$) wie beispielsweise Glyzerin-$C_{14}$-$C_{20}$-Ester, Sorbitan-Mono-Oleat oder Sorbitan-Mono-Stearat und mit HLB-Werten $>10$, z. B. ethoxilierte Nonylphenole (EO-Grad 6 bis 20), ethoxilierte Fettalkohole oder Fettsäuren mit jeweils 10 bis 22 Kohlenstoffatomen in Frage. Diese weiteren Komponenten der W/Ö-Dispersion bzw. W/Ö-Emulsion der wässrigen Metallsalzlösung in einer hydrophoben Phase sind ebenfalls bekannt. Typische Dispersionen bzw. Emulsionen enthalten etwa von 30 bis 70 Gew.% hydrophobe Phase und von 0,1 bis 15 Gew.% Emulgator bzw. Emulgatorgemisch.

Durch die Wahl bestimmter Kohlenwasserstoff-Emulgatorkombinationen ist es dabei möglich, die Eigenschaften der Gele zu beeinflussen, z. B. werden mit isoparaffinischen Kohlenwasserstoffen sprödere Gele, mit aliphatisch-naphthenischen Kohlenwasserstoffen elastische kautschukartige Gele erhalten.

Die radikalische Polymerisation wird mit Hilfe der üblichen Polymerisationsinitiatoren, wie Peroxiden, Azoverbindungen und/oder Redoxsystemen oder photochemisch, z. B. durch UV-Strahlung, ausgelöst und im Bereich von 5–120 °C, in der Regel unter Normaldruck durchgeführt, wobei die Umsetzung der Monomeren vollständig zur W/Ö-Polymerisat-Dispersion geschieht. Die Polymerisationsbedingungen werden in der Regel so gewählt, dass hochmolekulare Polymerisate (M : 500 000–8 Mill) gebildet werden, die in wässriger Lösung viskositätsbildend sind.

Auch niedriger-molekulare Polymerisate können verwendet werden, da durch die in W/Ö-Polymerisat-Dispersionen mögliche hohe Polymerisatkonzentration und die vernetzend wirkende Reaktion der W/Ö-Polymerisat-Dispersion mit mehrwertigen Metallionen stabile Gele gebildet werden.

Die beschriebenen Polymerisat-Dispersionen können als solche oder in Mischungen mit anderen W/Ö-Polymerisat-Dispersionen auf der Basis wasserlöslicher Polymerisate verwendet werden. So kann beispielsweise auch eine Mischung verschieden ionogener oder ionogener und nichtionogener W/Ö-Polymerisat-Dispersionen verwendet werden.

Zur Herstellung der erfindungsgemässen Gele werden W/Ö-Polymerisat-Dispersionen mit einem Polymerisatgehalt von 10 bis 70, insbesondere 10 bis 50 Gew.% bevorzugt.

Die verwendeten wässrigen Metallsalzlösungen haben Konzentrationen von 0,01 bis 20, vorzugsweise 0,2 bis 10 und insbesondere 0,5 bis 5 Gew.%. Die Bildung der Gele ist zeitlich abhängig von der Salzkonzentration. Die Verdünnung der Salzlösung beschleunigt die Bildung des unlöslichen metallionenhaltigen Gels.

Im Gegensatz zu den eingangs beschriebenen bekannten Gelherstellungsverfahren, wo ein Wasserzufluss den Gelbildungsvorgang stört, führt bei dem erfindungsgemässen Verfahren die Verdünnung des Systems zur vorzeitigen Gelbildung, was in vielen Anwendungsfällen sehr erwünscht ist.

Das Zusammengeben der Reaktionskomponenten kann in beliebiger Weise erfolgen; z. B. kann die Salzlösung vorgelegt und die W/Ö-Polymerisat-Dispersion mechanisch zugemischt werden. Der mechanische Mischprozess beeinflusst jedoch bei gegebener Zusammensetzung des Flüssigkeitsgemisches den Ablauf der Gelbildung, was bei der praktischen Anwendung des Herstellungsverfahrens zu beachten ist. Wird eine W/Ö-Emulsion des Metallsalzes mit einer wässrigen Polymerisatlösung umgesetzt, so wird bevorzugt zunächst die Lösung des Metallsalzes mittels eines geeigneten W/Ö-Emulgators zu einer W/Ö-Emulsion emulgiert und diese dann mit der wässrigen Phase gegebenenfalls unter Rühren vermischt.

So wird die «offene Zeit» zur Handhabung der leicht flüssigen Mischung durch starke mechanische Behandlung verkürzt. Gleichfalls ist eine gewisse Temperaturabhängigkeit der Vergelung festzustellen, die bei tieferen Temperaturen leicht verzögert wird.

Die Umwandlung einer wässrigen Mischung aus W/Ö-Polymerisat-Dispersion und beispielsweise $FeCl_3 \cdot 6 H_2O$ zum Gel erfolgt in der Weise, dass diese nach dem Zusammengeben der Komponenten nicht unter stetiger Viskositätszunahme allmählich vergelt, sondern je nach eingestellter Salzkonzentration sofort oder nach einer gewissen Zeit, in der die Mischung noch weitgehend leichtflüssig bleibt, unter raschem Viskositätsanstieg schnell vergelt, wobei die Festigkeit des Gels allmählich zunimmt.

Die Phasenumkehr und Vergelung erfolgen ohne merkbaren Wärmeeffekt, so dass sich der Zustand des Gels von daher vorteilhafterweise nicht ändert.

Vor der Vergelung können der Mischung Farbstoffe oder Feststoffe verschiedenster Art, z. B. Sand, Zement, Bentonit, Holzmehl, Polyurethanstaub, Metallspäne, zugesetzt werden.

Die erfindungsgemässen Gele sind wasserhaltige, farblose oder durch die Metall-Ionen gefärbte, trübe, nicht brennbare Substanzen mit unterschiedlicher Festigkeit.

Durch Variation des Polymerisatanteils und der übrigen Bestandteile der wässrigen und öligen Phase im Gemisch mit den mehrwertigen Metallsalzen werden gute homogene kompakte Gele unterschiedlicher Eigenschaften erhalten. So werden beispielsweise in Wasser schwer- oder unlösliche unterschiedlich gefärbte, spröde oder kautschukartige Gele mit verschiedener Festigkeit erhalten.

Die Verwendung von isoparaffinischen Kohlenwasserstoffen als Ölphase ergibt häufig, insbesondere bei W/Ö-Polymerisat-Dispersionen, feste Gele, die jedoch bei mechanischer Beanspruchung instabil sind.

Aliphatisch-naphthenische Kohlenwasserstoffe als Ölphase ergeben dagegen, vor allem mit in wässriger Lösung überwiegend anionische und/oder nicht-ionische W/Ö-Polymerisat-Dispersionen mehr oder weniger fester, aber mechanisch stabile elastische Gele.

Die beschriebenen Gele zeigen direkt oder indem die flüssige Ausgangsmischung aufgesprüht oder gegossen wird, auf einer Feststoffoberfläche von Beton, Glas, Metallen, Holz u. a. ein deutliches Haftvermögen.

Die Gele sind dementsprechend vielfältig in verschiedenen Anwendungsbereichen zu verwenden. Aufgrund ihrer leichten Formbarkeit (vor dem Erreichen des Gelzustandes und durch Zerschneiden danach) sind sie zur Auskleidung von Hohlräumen oder allgemein als Isolierungsmaterial verwendbar. Sie sind geeignet als Dichtmasse zur Abdichtung von wässrigen Ab- oder Zuflüssen in Räumen.

Hierbei besitzt die Anwendung der Gele im wasserhaltigen Bodenbereich gegenüber bekannten Gelherstellungsverfahren deutliche Vorteile:

1. Es können feste, elastisch abdichtende Gelmassen hergestellt werden, die in Feuchträumen gegen mechanische Einflüsse stabil bleiben.
2. Die Gelerzeugung ist gegen Verunreinigung nicht so störanfällig; die Verdünnung des flüssigen, leicht zu handhabenden W/Ö-Polymerisat-Dispersions- und Metall-Salzgemischs mit Wasser fördert die Ausbildung des Gelzustandes.
3. Die W/Ö-Polymerisat-Komponenten entsprechen besser den ökologischen Anforderungen.

In ähnlicher Weise können die beschriebenen Gele zur Verfestigung von losen fein- oder grobkörnigen Materialien, beispielsweise Sanden und Kiesen dienen. Die Gele haften an Materialien und binden mörtelartig als Verbundmasse diese Materialien ein und verfestigen sie in vorgegebenen Formen.

Die aus der leichtflüssigen homogenen Mischung gebildeten gelartigen Substanzen besitzen zudem aufgrund des hohen Polymerisatgehaltes und der Art der Umwandlung anwendungstechnisch vorteilhaftere Eigenschaften, wie höhere Festigkeit und Elastizität, sowie eine grössere chemische Beständigkeit.

Zur Charakterisierung der Geleigenschaften der bekannten und neuen Substanzen gemäss der Erfindung und zur Angabe der weiteren Unterschiede und Vorteile werden nachfolgend die Unterschiede anhand von $Fe^{3+}$-haltigen Gelen beschrieben.

1. Beim Zusammengeben eines hochmolekularen anionischen Copolymerisats in 1%iger wässriger Lösung, wobei das Polymerisat aus 30 Mol% Na-Acrylat und Acrylamid (viskosimetr. Molgewicht ca. 5 Mill) gebildet ist mit einer 1%igen Lösung von $FeCl_3 \cdot 6 H_2O$ wird unter sofortiger Reaktion der Komponenten eine (inhomogene) Ausfällung gebildet.

2. Zur Verzögerung der Reaktion und Gelbildung beschreibt die US-PS 4 018 286 die zusätzliche Verwendung von retardierend wirkenden Ionen (in Form von Citrat, Nitrilotriacetat, Tartrat, Tripolyphosphat, Methaphosphat, Gluconat und Orthophosphat), die ein Zusammengeben und Mischen der Polymerisat- und Salzlösung erleichtern.

Homogene wässrige Polymerisat-$Fe^{3+}$-Gele werden allerdings mit dem bei (1) genannten Copolymerisat erst bei erhöhter Retarderkonzentration (z. B. 100.000 ppm Citronensäure ($C_6H_8O_7 \cdot H_2O$) und erhöhter $Fe^3$-Konzentration (20.000 ppm) erhalten.

Die Brookfield Viskosität der Copolymerisatlösung beträgt 5500 mPa.s;
nach Zugabe von Citronensäure     320 mPa.s,
nach Zugabe von $Fe^{3+}$     920 mPa.s.

Das auf diese Weise gebildete stark wasserhaltige Gel ist nicht formbeständig, sondern zerfliesst stärker als die auf ähnliche Weise gebildeten $Cr^{3+}$-Gele. Es nimmt im Gegensatz zu den $Cr^{3+}$-Gelen Wasser auf und wird flüssiger. Charakteristisch für diese Gele ist ihr Verhalten in einer Filterpresse. Sie lassen sich infolge mangelnder Festigkeit bei 7bar durch ein Sieb (mit Maschenweite 0,315 mm) pressen.

Weiterhin wird das beschriebene wässrige Polymerisat-$Fe^{3+}$-Gel wie in der US-PS 4 018 286 beschrieben, in 0,1 n HCl(pH 1) unter Bildung eines schleimigen weissen Niederschlages aufgelöst.

3. Bei der Herstellung der erfindungsgemässen Gele, die aus W/Ö-Polymerisat-Dispersion und mehrwertigen Metallsalzen entstehen, wird nicht mit wässrigen Polymerisatlösungen bestimmter Konzentrationen und Menge gearbeitet, und es werden keine die Vergelung retardierenden zusätzlichen Substanzen nach Art der US-PS 4 018 286 verwendet.

Die Topfzeit kann durch die Metallsalzkonzentration (beispielsweise von $FeCl_3 \cdot 6H_2O$) reguliert werden, wobei überraschenderweise mit zunehmender Salzkonzentration die offene Zeit wächst.

Beim Verdünnen mit Wasser wird die Umwandlung in ein Gel beschleunigt. Es entstehen in Substanz homogene, schnittfeste, formbeständige Gele, die in Wasser unlöslich sind, aber begrenzt quellen, wobei das Quellvermögen durch im Wasser gelöste Salze beeinflusst, d. h. vermindert werden kann.

Die Gele besitzen eine ausreichende Festigkeit, um poröse, durchlässige Medien abzudichten, wobei die Undurchlässigkeit und Verfestigung auch einer gewissen Druckbelastung (z. B. 7bar) standhält. In den mechanischen Eigenschaften wie Festigkeit, Elastizität und Zugfestigkeit unterscheiden sich die Dispersionsgele deutlich von den bisher angewandten stark wasserhaltigen Gelen.

In 0,1 n HCL wird das $Fe^{3+}$-Gel gemäss der Erfindung nicht aufgelöst, sondern zeigt unter Beibehaltung der Form des Probestückchens lediglich eine leichte Schrumpfung.

Das Gel ist bei 80 °C in Wasser gelagert mehr als 8 Tage stabil.

Die zitierte Angabe in US-PS 4 018 286 bezüglich der Dispersion von Polymeren bezieht sich auf eine Dispersion des Polymeren in einer gegebenen Wassermenge und die nachfolgende Zugabe der gewünschten Menge des vernetzenden Agenz, das aus einer Lösung eines komplexierend, retardierend wirkenden Ions und einem mehrwertigen Metallion besteht.

Die Dispersion eines üblicherweise verwendeten, wasserlöslichen Polymerisats in Pulverform ist wegen des Anquellens und langsamen Lösens der Teilchen und einer vorzeitigen Reaktion der Komponenten (s. o.) als solche nicht gut verwendbar; die Mischung soll nach der angegebenen Beschreibung deshalb auch als (wässrige) Lösung mit oder ohne Verzug injiziert werden.

Nach dem Stand der Technik kann zwar eine W/Ö-Polymerisat-Dispersion in Wasser dispergiert werden, hierbei wird jedoch unter Phasenumkehr das fein dispergierte Polymerisat sofort gelöst, sichtbar an einem starken Viskositätsanstieg, und die anschliessende Verfahrensweise entspricht mit den nachteiligen Merkmalen dem beschriebenen Arbeiten mit Lösungspolymerisaten.

Das erfindungsgemässe Verfahren arbeitet mit W/Ö-Polymerisat-Dispersionen, die wiederum in mehrwertigen Metallsalzlösungen dispergiert werden, wobei die Mischungen leichtflüssig bleiben, der Zeitraum bis zur «Topfzeit» d. h. Phasenumkehr unter gleichzeitiger Vergelung eingestellt werden kann und das Stadium der hochviskosen mit Wasser verdünnbaren Polymerisatlösungen nicht mehr sichtbar auftritt.

Die erfindungsgemässen Gele können vorteilhaft erst unmittelbar vor ihrem Einsatz durch Vermischen bzw. Umsetzung der Komponenten hergestellt werden. Dabei können die Komponenten getrennt zum Einsatzort gebracht werden.

Die folgenden Beispiele zeigen die Herstellung der erfindungsgemäss zu verwendenden Polymerisate (A–F), sowie der erfindungsgemässen Gele und deren Eigenschaften.

Beispiel A

In einem mit Rührer, Thermometer und Stickstoffein- und -auslass versehenen Reaktionsgefäss werden folgende Komponenten gemischt:

724 Teile einer Mischung aus 82% gesättigtem, aliphatischem Kohlenwasserstoff und 18% naphthenischem Kohlenwasserstoff (Siedebereich der Mischung 243–329 °C), 97 Teile Sorbitanmonostearat und 33 Teile eines ethoxylierten Fettalkohols ($C_{12}$–$C_{18}$, Ethoxilierungsgrad 3–7). Dann wird eine Lösung aus 861 Teilen Wasser, 394 Teilen Acrylamid, 215 Teilen Acrylsäure und 265 Teilen NaOH, 45%ig, deren pH-Wert auf 8,0 eingestellt wird, zugefügt und unter Rühren eine W/Ö-Dispersion gebildet. Man leitet ca. 20 Minuten lang Stickstoff durch die Emulsion und fügt eine Lösung von 0,6 Teilen 2,2′Azobisisobutyronitril in wenig Aceton zu. Die Mischung wird auf 60 °C erhitzt und unter Polymerisation bildet sich eine gegen Sedimentation stabile homogene W/Ö-Polymerisat-Dispersion.

Die W/Ö-Polymerisat-Dispersion wird mit 78 Teilen eines ethoxilierten Nonylphenols (Ethoxilierungsgrad 7–11) versetzt. Das viskosimetrisch bestimmte Molekulargewicht des Polymerisats beträgt ca. 6,7 Mill; die Viskosität der 0,5%igen Lösung (bezogen auf Polymerisat) in destilliertem Wasser beträgt 9100 mPa.s.

Beispiel B

Es wird wie zuvor beschrieben verfahren und zunächst die Ölphase aus 39,5 Teilen einer Mischung aus 82% gesättigtem aliphatischen Kohlenwasserstoff und 18% naphthenischem Kohlenwasserstoff (Siedebereich 243–329 °C), 5 Teilen Sorbitanmonooleat und 2 Teilen eines ethoxylierten Nonylphenol (Ethoxylierungsgrad 4–8) gebildet. Dann wird eine Lösung aus 47 Teilen Wasser, 29 Teilen Acrylamid und 3 Teilen Acrylsäure sowie 36 Teilen Natronlauge, 45%ig, deren pH-Wert auf 8,0 eingestellt ist, zugefügt und mit der hydrophoben Phase zur W/Ö-Dispersion gemischt.

Man leitet 20 Minuten lang Stickstoff durch die Emulsion und fügt eine Lösung von 0,9 g 2,2′Azobisisobutyronitril in wenig Aceton zu. Die Mischung wird auf 60 °C erwärmt und durch Polymerisation bildet sich eine homogene W/Ö-Polymerisat-Dispersion.

Die entstandene W/Ö-Polymerisat-Dispersion wird mit 14 Teilen des Polymerisats A und 5 Teilen eines ethoxylierten propoxylierten Nonylphenols (Ethoxylierungsgrad 12–16, Propoxylierungsgrad 3–17) vermischt. Die wässrige 0,5%ige Lösung des Polymerisats besitzt eine Viskosität von 1700 mPa.s.

Beispiel C

Es wird wie zuvor beschrieben verfahren und eine ölige Phase aus 262 Teilen einer Mischung aus 82% gesättigtem aliphatischen Kohlenwasserstoff und 18% naphthenischem Kohlenwasserstoff (Siedebereich 243–329 °C), 33 Teilen Sorbitanmonostearat und 20 Teilen eines ethoxylierten Fettalkohols ($C_{12}$–$C_{18}$, Ethoxylierungsgrad 3–7) gebildet. Danach wird eine wässrige Lösung aus 344 Teilen Wasser und 147 Teilen Acrylamid, deren pH-Wert 8,0 beträgt, zugefügt und unter Rühren eine W/Ö-Dispersion gebildet. Man leitet 20 Minuten Stickstoff durch die Emulsion und polymerisiert wie zuvor mit 0,5 Teilen 2,2′Azobisisobutronitril, gelöst in wenig Aceton zur homogenen W/Ö-Polymerisat-Dispersion.

Die wässrige 1%ige Lösung des Polymerisats besitzt eine Viskosität von 3100 mPa.s.

Beispiel D

Es wird wie bei der Herstellung des Polymerisats A verfahren, jedoch werden in die wässrige Lösung aus 861 Teilen Wasser, 394 Teilen Acrylamid und 215 Teilen Acrylsäure zusätzlich 0,2 Teile Methylenbisacrylamid gegeben.

Die in der beschriebenen Weise durchgeführte Polymerisation ergibt ein wasserunlösliches Polymerisat in W/Ö-Dispersion, das in 0,5%iger Konzentration die Viskosität des destillierten Wassers auf 920 mPa.s. erhöht.

Beispiel E

Es wird wie zuvor beschrieben verfahren und zunächst eine ölige Phase aus 254 Teilen einer Mischung aus 82% gesättigtem aliphatischen Kohlenwasserstoff und 18% naphthenischem Kohlenwasserstoff (Siedebereich 243–329 °C) und 30 Teilen Sorbitanmonostearat gebildet. Dann wird durch Zufügen einer Lösung von 286 Teilen Wasser, 170 Teilen Acrylamid und 70 Teilen Trimethylammoniumchlorid-ethylmethacrylat, die auf pH 3 eingestellt wurde, unter Rühren die W/Ö-Dispersion gebildet. Man leitet wiederum 20 Minuten lang Stickstoff durch die Emulsion, fügt eine Lösung von 0,5 Teilen 2,2′-Azobisisobutyronitril in wenig Aceton zu und erwärmt auf 60 °C.

Durch Polymerisation bildet sich eine homogene W/Ö-Polymerisat-Dispersion, die mit 7 Teilen eines ethoxylierten Fettalkohols ($C_{12}$–$C_{18}$, Ethoxylierungsgrad 8–12) versetzt wird.

Die 1%ige Lösung des Polymerisats besitzt eine Viskosität von 10 400 mPa.s.

Beispiel F

Unter Verwendung der zuerst bei der Herstellung des Polymerisats A beschriebenen Apparatur wird in analoger Weise verfahren und aus 254 Teilen einer Mischung aus 82% gesättigtem aliphatischen Kohlenwasserstoff und 18% naphthenischem Kohlenwasserstoff (Siedebereich 243–329 °C), 30 Teilen Sorbitanmonostearat und 7 Teilen eines ethoxylierten Fettalkohols ($C_{12}$–$C_{18}$, Ethoxylierungsgrad 3–7) die ölige Phase gebildet. Dann wird aus 288 Teilen Wasser, 158 Teilen Acrylamid, 70 Teilen Trimethylammoniumchlorid-ethylmethacrylat, 12 Teilen Acrylsäure und 0,65 Teilen NaOH sowie 2,3 Teilen Butylmethacrylat eine Lösung zubereitet und unter Rühren in die ölige Phase gegeben, wobei sich die W/Ö-Dispersion bildet. Man leitet ca. 20 Minuten Stickstoff durch die Emulsion, fügt eine Lösung von 0,6 Teilen 2,2′-Azobisisobutyronitril in wenig Aceton zu und erwärmt die Mischung auf 60 °C. Durch Polymerisation wird die homogene Polymerisat-Dispersion gebildet. Als Aktivator werden 29 Teile eines ethoxylierten Nonylphenols zugesetzt. (Ethoxylierungsgrad 7–12). Das wasserlösliche Polymerisat besitzt in 1%iger Lösung eine Viskosität von 8600 mPa.s.

Beispiel 1

Es werden unter definierten Bedingungen Mischungen aus jeweils 2 Teilen $FeCl_3 \cdot 6H_2O$-Lösung verschiedener Konzentration und 1 Teil der W/Ö-Polymerisat-Dispersion A mit einem Fingerrührer bei 300 U-Min. und einer Rührzeit von 10 Min. hergestellt. Die Viskositäten der leichtflüssigen Mischungen werden mit einem Haake Viskosimeter VT 01 (Messkörper 1) gemessen und die Zeit vom Mischen bis zur Gelbildung bestimmt. Abhängig von der Salzkonzentration tritt die Verdickung und Gelbildung verzögert ein.

| Konzentration $FeCl_3 \cdot 6H_2O$ % | Viskosität d. Mischung (mPa.s) | Zeit bis zur Vergelung (Min.) |
|---|---|---|
| 2 | 23 | 4,5 |
| 2,25 | | 9 |
| 2,5 | 20 | 14 |
| 2,75 | | 22 |
| 3,0 | | 28,5 |
| 3,5 | | 34 |
| 4,0 | | 68,5 |

Ebenso kann die Vergelung einer Mischung aus einer Salzlösung und der W/Ö-Polymerisat-Dispersion durch weitere Salzzusätze verzögert werden.

Die Vergelungszeiten sind vom Mischvorgang abhängig und müssen bei der technischen Anwendung bestimmt werden.

Beispiel 2

Aus 150 ml einer wässrigen 5%igen $Fe_2-(SO_4)_3$-Lösung und 60 g der W/Ö-Polymerisat-Dispersion A wird durch Mischen der Komponenten zu einer stabilen flüssigen Polymerisat-Dispersion gemischt. Nach Zusatz einer Lösung aus 2,0 g NaOH und 50 ml Wasser, die unter Rühren eingetragen werden, bildet sich sofort ein Gel.

Beispiel 3

70 g der W/Ö-Polymerisat-Dispersion A werden mit 150 g einer 4%igen wässrigen Lösung $FeCl_3 \cdot 6H_2O$ vermischt. Es bildet sich ein in Wasser unlösliches, braungefärbtes elastisches Gel.

Beispiel 4

60 g der W/Ö-Polymerisat-Dispersion A werden mit 150 g einer wässrigen 0,5%igen Titan-III-Chlorid-Lösung gemischt. Es bildet sich ein zunächst grau-grünes, wasserunlösliches, elastisches Gel, das sich beim Stehen an der Luft äusserlich weiss färbt und relativ wenig Wasser durch Verdunsten abgibt.

Beispiel 5

150 g einer 0,3%igen wässrigen Lösung von Kaliumdichromat ($K_2Cr_2O_7$) werden mit 0,36 g Natriumpyrosulfit versetzt. Der Cr-Ionen-haltigen Lösung werden 60 g der W/Ö-Polymerisat-Dispersion A zugefügt. Es tritt eine sofortige Vergelung zu einem festen, wasserunlöslichen, grünen Gel ein.

Beispiel 6

150 g einer 3%igen wässrigen $AlCl_3 \cdot 6H_2O$-Lösung werden mit 60 g der W/Ö-Polymerisat-Dispersion A gemischt. Nach 10 Minuten beginnt die Vergelung, wobei sich das Gel zunehmend verfestigt.

Beispiel 7

Jeweils 150 g einer wässrigen 4%igen Lösung von $FeCl_3 \cdot 6H_2O$ werden vorgelegt und 60 g der W/Ö-Polymerisat-Dispersion C eingetragen. In Abhängigkeit von der Menge des zur Salzlösung ausgesetzten Umkehremulgators, eines ethoxylierten, propoxylierten Nonylphenols (Ethoxylierungsgrad 12–16, Propoxylierungsgrad 3–7) wird zeitlich verschoben die Vergelung der Mischung zu einem farblosen, sehr elastischen Gel beobachtet.

| Zusatzmenge v. Umkehremulgator (% bez. auf W/Ö-Polymerisatdispersion) | Beginn der Vergelung (Min.) | Vergelung nach Min. |
|---|---|---|
| 5% | sofort | 5 |
| 4% | 5 | 16 |
| 3% | 11 | 35 |

Beispiel 8

60 g der W/Ö-Polymerisat-Dispersion B, die zwei verschieden stark anionisch wirksame Polymerisate enthält, werden mit jeweils 120 g von $FeCl_3 \cdot 6H_2O$ Lösungen verschiedener Konzentration gemischt.

Die erhaltenen Flüssigkeitsmischungen sind aufgrund der verschieden ionogenen Polymerisatanteile höher viskos als die Mischungen nach Beispiel 1. Zeitlich abhängig von der Salzkonzentration werden die Gele gebildet.

| Konzentration $FeCl_3 \cdot 6H_2O$ (%) | Viskosität d. Mischung (mPa.s) | Zeit der Vergelung (Min.) |
|---|---|---|
| 1,0 | 23 | 1,5 |
| 1,5 | 20 | 6 |
| 2,0 | 29 | 20 |

Beispiel 9

Zu 120 g einer 2%igen wässrigen $FeCl_3 \cdot 6H_2O$-Lösung werden 60 g der W/Ö-Polymerisat-Dispersion D gegeben, die teilweise vernetztes Polymerisat enthält. Es bildet sich nach ca. 8 Minuten ein grau gefärbtes Gel, das jedoch nahezu nicht elastisch verformbar ist und nur eine geringe Festigkeit zeigt, so dass es bei mechanischer Beanspruchung zerfällt.

Ähnlich mechanisch instabile Substanzen werden beim Vergelen von Mischungen aus kationisch und anionisch wirksamen W/Ö-Polymerisat-Dispersionen erhalten.

Beispiel 10

Eine flüssige Polymerisatmischung aus 600 g W/Ö-Polymerisat-Dispersion A und 1 200 g einer wässrigen 3%igen $FeCl_3 \cdot 6H_2O$-Lösung wird hergestellt.

Die flüssige Mischung wird mit unterschiedlichen Mengen Wasser verdünnt und die Vergelung beobachtet.
a) Die flüssige Mischung wird mit Wasser im Verhältnis 2 : 1 gemischt. Es bildet sich nach 3 Minuten das Gel.
b) Die flüssige Mischung wird 1 : 1 mit Wasser gemischt. Es tritt nach 1 Minute die Vergelung ein.
c) 200 g der flüssigen Mischung werden in 1000 ml Wasser gegeben. Es bilden sich sofort feinteilige instabile Gel-Flocken, und die Viskosität der Flüssigkeit steigt nach kurzem Rühren mit 1720 mPa.s. und beträgt nach 2 Stunden 4680 mPa.s. Nach 2 Tagen ist die 1,4% Polymerisat enthaltende Mischung homogen vergelt (Viskosität nach Brookfield ca. 127 000 mPa.s.).
Die Versuche zeigen, dass bei Verdünnung der Polymerisat-Mischung die Gelbildung beschleunigt wird.

Beispiele 11 bis 16

120 g einer 2,5%igen $FeCl_3 \cdot 6H_2O$-Lösung werden mit 60 g der W/Ö-Polymerisat-Dispersion A unter Rühren zusammen gegeben, in diese flüssige Mischung werden in einer Menge von jeweils 10% (bezogen auf die Mischung)
    (11) Zement
    (12) Bentonit
    (13) Holzmehl
    (14) Polyurethan-Hartschaummehl
    (15) Sand und
    (16) Fe-Feilspäne gegeben.
Es bildet sich nach kurzer Zeit jeweils ein Gel, das die feinteiligen Feststoffe enthält.

Beispiel 17

Eine mit drei senkrecht übereinander angeordneten Bohrungen (Durchmesser ca. 1,5 cm) versehene Betonwand wird mit einem einseitig angeschlossenen Gefäss versehen, das mit Kies und Wasser angefüllt ist, wobei das Wasser durch die Bohrungen austritt.

In die untere Bohrung werden durch ein Rohr, das gleichzeitig die Bohrung stopfenartig verschliesst, eine flüssige Mischung aus 1000 ml wässriger 2%iger $FeCl_3 \cdot 6H_2O$-Lösung und 500 ml W/Ö-Polymerisat-Dispersion A unter Druck eingepresst. Ca. 8 Min. nach dem Einpressen der Mischung bildet sich das Gel. (Vergleichsweise kontrolliert mit Hilfe einer Glasprobe.) Da beim Einpressen die Mischung sowohl horizontal in Abhängigkeit von der Dichte der Sandpackung als teilweise auch aufwärts in das Wasser/Sandgemisch läuft, werden alle 3 Bohrungen vom gebildeten Gel verschlossen und abgedichtet.

Das sandhaltige Gel kann durch Entfernen der Sandausschüttung und des Wassers als länglicher Stopfen vor den Bohrungen beobachtet werden.

Die Mischung aus W/Ö-Polymerisat-Dispersion und mehrwertigem Salz ist als Abdichtungsmittel wirksam.

Beispiel 18

1 Teil der W/Ö-Polymerisat-Dispersion A wird mit 2 Teilen einer 2%igen wässrigen Lösung von $CuSo_4 \cdot 5H_2O$ gemischt. Es bildet sich ein festes, elastisches, leicht bläulich gefärbtes, opakes Gel.

Beispiel 19

1 Teil der W/Ö-Polymerisat-Dispersion A und 2 Teile einer wässrigen 2%igen $FeCl_3 \cdot 6H_2$-Lösung werden gemischt, die Flüssigkeit in eine dazu hergestellte Form gegossen und das gebildete, zunächst noch instabile Gel nach 48 Stunden Lagerung bei Normalbedingungen im geschlossenen Gefäss in einer Zerreissmaschine für Gummi (Lastbereich 0–250 kg) Dehnung mx.300%) geprüft.

Die Probe hielt einer 100%igen Dehnung bei einer Belastung von > 950 g stand.

Beispiel 20

Eine flüssige Mischung aus einem Teil der W/Ö-Polymerisat-Dispersion A und 2 Teilen einer 2,5%igen wässrigen $FeCl_3 \cdot 6H_2O$-Lösung wird jeweils so
a) in ein mit feinem Filterkies,
b) in ein mit grobem Kies
gefülltes Rohr gegossen, dass der Kies mit der flüssigen Mischung getränkt wird.

Das Gel bildet sich nach ca. 20 Minuten; es haftet im Gefüge und verfestigt mörtelartig (als Verbundmasse) das Kiesmaterial, so dass es ohne Schutzrohr in der erhaltenen Säulenform in gewissem Masse gegen mechanische Einwirkungen stabilisiert ist.

Beispiel 21

Zur Prüfung der Beständigkeit des Gels von Versuch 17 gegenüber einigen Chemikalien werden Gelstücke in wässrigen Lösungen verschiedener Salz gelagert.

Die bisherige Beobachtung zeigt, dass das Gel gegenüber 10%iger NaCl-Lösung, gesättigter $MgSo_4$-Lösung, gesättigter $CaCl_2$-Lösung, sowie in synthetischem Lagerstättenwasser (165 g/l NaCl, 33 g/l $CaCl_2 \cdot 2H_2O$, 12,8 g/l $MgCl_2 \cdot 6H_2O$) weitgehend beständig ist.

Beispiel 22

Aus einer wässrigen 2%igen $FeCl_3 \cdot 6H_2O$-Lösung und W/Ö-Polymerisat-Dispersion E, die im Verhältnis 2 : 1 gemischt werden, bildet sich nach ca. 15 Minuten ein fast farbloses, festes Gel, das zunächst bei mechanischer Beanspruchung instabil ist, z. B. leicht zerteilbar, sich danach jedoch zunehmend verfestigt und eine gewisse Elastizität zeigt. Das Gel ist in Wasser unlöslich und quillt etwas auf.

## Beispiel 23

Die W/Ö-Polymerisat-Dispersionen A und E werden zu gleichen Teilen gemischt. Eine wässrige 2%ige $FeCl_3 \cdot 6H_2O$-Lösung und das W/Ö-Polymerisat-Dispersionsgemisch werden im Verhältnis 2 : 1 unter Rühren zusammengegeben. Nach ca. 2 Minuten beginnt die Vergelung des Gemisches.

Es bildet sich ein wasserunlösliches, bräunliches, sehr elastisches Gel.

## Beispiel 24

Die W/Ö-Polymerisat-Dispersion F wird mit einer wässrigen 2%igen $FeCl_3 \cdot 6H_2O$-Lösung im Verhältnis 1 : 2 gemischt. Die einsetzende Vergelung ergibt nach 15 Minuten ein festes, wenig elastisches Gel.

## Beispiel 25

50 g der W/Ö-Polymerisat-Dispersion A werden mit jeweils 100 g einer 2%igen Metallsalzlösung von $NiCl_2 \cdot 6H_2O$, $CuCl_2 \cdot 2H_2O$, $SnCl_2 \cdot 2H_2O$, La-$(NO_3)_3 \cdot 6H_2O$, $Ce(SO_4)_2 \cdot 4H_2O$, $Pb(NO_3)_2$, $Hg(NO_3)_2$ und $UO_2(CH_3COO)_2 \cdot 2H_2O$ unter Rühren versetzt. Es bildet sich aus der jeweiligen Mischung ein festes Gel.

## Beispiel 26

97 g einer 2%igen wässrigen Lösung von $FeCl_3 \cdot 6H_2O$ wird mit 10 g Umkehremulgator (wie in Beispiel 7) versetzt. Die Lösung wird unter Rühren zu 53 g einer 56,5% polymerisathaltigen W/Ö-Dispersion vom Typ B gegeben. Es bildet sich ein braungefärbtes Gel mit hoher Festigkeit.

## Beispiel 27

28,5 g einer 2%igen wässrigen Lösung von $AlCl_3 \cdot 6H_2O$ werden mit 21,5 g einer Lösung aus dem aliphatisch, naphthenischen Kohlenwasserstoffgemisch nach Beispiel A und 1,5 g Sorbitanoleat, das als W/O-Emulgator wirksam ist, unter Bildung einer W/O-Emulsion gemischt.

Gleiche Gewichtsteile der W/O-Emulsion und einer 20%igen wässrigen Lösung eines Polymerisats aus Acrylamid und Ammoniumacrylat werden unter Rühren gemischt und mit 10 Gew.-% (bezogen auf die Gesamtmenge) eines ethoxilierten Nonylphenols (Ethoxilierungsgrad 7–11) versetzt. Unter Phasenumkehr der W/O-Emulsion und Viskositätsanstieg in der Mischung bildet sich ein weisses Gel.

## Beispiel 28

28,5 g einer 2%igen wässrigen Lösung von Titan-III-chlorid wird in gleicher Weise wie in Beispiel 27 beschrieben, unter Zusatz von 21,5 g des aliphatisch, naphthenischen Kohlenwasserstoffgemisches, das 1,5 g eines Sorbitanoleates enthält, durch Mischen der Komponenten eine W/O-Emulsion hergestellt.

Die Emulsion wird jeweils unter Rühren mit gewichtsmässig gleichen Teilen der 20%igen Polymerisatlösung aus Acrylamid und Ammoniumacrylat gemischt und mit 10% (bezogen auf die Gesamtmenge) eines Netzmittels auf der Basis eines propoxilierten, ethoxilierten Nonylphenols versetzt. Es bildet sich ein grün gefärbtes Gel.

## Beispiel 29

40 g einer 3%igen wässrigen Lösung von $FeCl_3 \cdot 6H_2O$ werden mit 30 g des flüssigen aliphatisch naphthenischen Kohlenwasserstoffgemisches nach A, das 2,1 g Glyzerinmonooleat als W/O-Emulgator enthält, versetzt. Die Mischung bildet unter Rühren eine W/O-Emulsion.

Die Emulsion wird unter Rühren mit gleichen Teilen einer 10%igen wässrigen Polymerisatlösung aus Acrylamid und Ammoniumacrylat gemischt und mit 10% (bezogen auf die Gesamtmenge) eines Netzmittels auf der Basis eines ethoxilierten Nonylphenols (Ethoxilierungsgrad 7–11) versetzt. Es bildet sich ein braungefärbtes Gel.

**Patentansprüche für die Vertragsstaaten: BE, CH, DE, FR, GB, IT, LI, LU, NL, SE**

1. Gel, bestehend aus den Reaktionsprodukten von wasserlöslichen Polymerisaten auf der Basis von Poly(meth)acrylsäure-Derivaten und mehrwertigen Metallsalzen, dadurch gekennzeichnet, dass das Gel entweder
a) die Reaktionsprodukte von als W/Ö-Dispersion vorliegender wasserlöslicher Polymerisate mit wässrigen Lösungen der Metallsalze oder
b) die Reaktionsprodukte von wässrigen Lösungen der Polymerisate mit einer W/Ö-Emulsion der Metallsalze
enthält.

2. Gel nach Anspruch 1, dadurch gekennzeichnet, dass es die Reaktionsprodukte von W/Ö-Dispersions-Polymerisaten mit Metallsalzlösungen enthält.

3. Gel nach Anspruch 1 oder 2, dadurch gekennzeichnet, dass es die Reaktionsprodukte aus einem oder mehreren wasserlöslichen Monomeren der aus Acrylsäure, Methacrylsäure und Salzen oder Derivaten der Acryl- oder Methacrylsäure bestehenden Gruppe mit Metallsalzen enthält.

4. Gel nach Anspruch 3, dadurch gekennzeichnet, dass es als Derivate von Acryl- und/oder Methacrylsäure deren wasserlösliche Ester oder deren Quaternisierungs-Produkte enthält.

5. Gel nach Anspruch 3, dadurch gekennzeichnet, dass die Polymerisate zu geringen Mengen, vorzugsweise von 0,1 bis 10 Gew.-%, bezogen auf die Summe aller Monomer-Bestandteile, aus einem oder mehreren nur begrenzt wasserlöslichen Monomeren aus der aus Acrylsäure- oder Methacrylsäureester, Vinylacetat, Vinylpyrrolidon und Acrylnitril bestehenden Gruppe aufgebaut sind.

6. Gel nach einem der vorangegangenen Ansprüche 1 bis 5, dadurch gekennzeichnet, dass es $Al^{3+}$, $Ti^{3+}$, $Cr^{3+}$, $Fe^{2+}$, $Fe^{3+}$, $Ni^{2+}$, $Cu^{2+}$, $Sn^{2+}$, $La^{3+}$, $Ce^{4+}$, $Pb^{2+}$, $Hg^{2+}$ und/oder $UO_2^{2+}$, vorzugsweise $Al^{3+}$, $Ti^{3+}$, $Cr^{3+}$, $Fe^{2+}$ und/oder $Fe^{3+}$ enthält.

7. Gel nach einem der Ansprüche 1 bis 6, dadurch gekennzeichnet, dass der Polymerisat-Anteil im Reaktionsprodukt aus W/Ö-Polymerisat-Dispersion und wässriger Metallsalzlösung 1 bis 40, vorzugsweise 4 bis 15 Gew.% beträgt.

8. Gel nach einem der Ansprüche 1 bis 6, dadurch gekennzeichnet, dass der Polymerisat-Anteil im Reaktionsprodukt aus wässriger Lösung des Polymerisats mit W/Ö-Emulsion des Metallsalzes 0,1 bis 40, vorzugsweise 1 bis 30 Gew.% beträgt.

9. Gel nach einem der Ansprüche 1 bis 8, dadurch gekennzeichnet, dass der Gehalt an Metallsalzen 0,1 bis 10, vorzugsweise 0,1 bis 5 Gew.% beträgt.

10. Gel nach einem der Ansprüche 1 bis 9, dadurch gekennzeichnet, dass es einen Aktivator für die Phasenumkehr der W/Ö-Polymerisat-Dispersion bzw. der W/Ö-Metallsalz-Emulsion enthält.

11. Gel nach Anspruch 10, dadurch gekennzeichnet, dass der Aktivator aus einem Emulgator oder einem Emulgator-Gemisch mit einer HLB-Zahl von > 10 besteht.

12. Gel nach Anspruch 10 oder 11, gekennzeichnet durch einen Aktivatorgehalt von 0,5 bis 10, vorzugsweise 0,5 bis 5 Gew.%.

13. Verfahren zur Herstellung von Gelen aus wasserlöslichen Polymerisaten auf der Basis von Poly(meth)acrylsäure-Derivaten und mehrwertigen Metallsalzen, dadurch gekennzeichnet, dass man entweder
a) die wasserlöslichen Polymerisate in Form von W/Ö-Dispersionen mit wässrigen Lösungen der mehrwertigen Metallsalze oder
b) die wässrigen Lösungen der Polymerisate mit W/Ö-Emulsionen der Metallsalze
umsetzt.

14. Verfahren nach Anspruch 13, dadurch gekennzeichnet, dass man die Umsetzung in Gegenwart von Aktivatoren für die Phasenumkehr der W/Ö-Polymerisat-Dispersion bzw. W/Ö-Emulsion des Metallsalzes vornimmt.

15. Verfahren nach Anspruch 13 oder 14, dadurch gekennzeichnet, dass die Reaktionsteilnehmer vor der Umsetzung, gegebenenfalls unter mechanischer Hilfe, vermischt werden.

16. Verfahren nach einem der Ansprüche 13 bis 15, dadurch gekennzeichnet, dass der Aktivator einer der beiden Reaktionskomponenten vor deren Mischung zugesetzt wird.

17. Verfahren nach einem der Ansprüche 13 bis 15, dadurch gekennzeichnet, dass der Aktivator der Mischung der beiden Reaktionskomponenten zugesetzt wird.

18. Verfahren nach einem der Ansprüche 13 bis 17, dadurch gekennzeichnet, dass W/Ö-Polymerisat-Dispersionen mit einem Gehalt von 10 bis 70, vorzugsweise 10 bis 50 Gew.% an wasserlöslichen Polymerisaten eingesetzt werden.

19. Verfahren nach einem der Ansprüche 13 bis 18, dadurch gekennzeichnet, dass man Polymerisate aus einem oder mehreren wasserlöslichen Monomeren der aus Acrylsäure, Methacrylsäure und Salzen oder deren Derivaten der Acryl- oder Methacrylsäure bestehenden Gruppe einsetzt.

20. Verfahren nach Anspruch 19, dadurch gekennzeichnet, dass man Polymerisate von wasserlöslichen Estern der Acryl- und/oder Methacrylsäure oder deren Quaternisierungs-Produkte einsetzt.

21. Verfahren nach einem der Ansprüche 13 bis 20, dadurch gekennzeichnet, dass man Polymerisate einsetzt, die zu geringen Anteilen, vorzugsweise von 0,1 bis 10 Gew.%, bezogen auf die Summe aller Monomer-Bestandteile, aus einem oder mehreren nur begrenzt wasserlöslichen Monomeren aus der aus Acrylsäure- oder Methacrylsäureester, Vinylacetat, Vinylpyrrolidon und Acrylnitril bestehenden Gruppe aufgebaut sind.

22. Verfahren nach einem der Ansprüche 13 bis 21, dadurch gekennzeichnet, dass man die Metallsalze von $Al^{3+}$, $Ti^{3+}$, $Cr^{3+}$, $Fe^{2+}$, $Fe^{3+}$, $Ni^{2+}$, $Cu^{2+}$, $Sn^{2+}$, $La^{3+}$, $Ce^{4+}$, $Pb^{2+}$, $Hg^{2+}$ und/oder $UO_2^{2+}$, vorzugsweise $Al^{3+}$, $Ti^{3+}$, $Cr^{3+}$, $Fe^{2+}$ und/oder $Fe^{3+}$ verwendet.

23. Verfahren nach einem der Ansprüche 13 bis 22, dadurch gekennzeichnet, dass man wässrige Metallsalzlösungen einer Konzentration von 0,01 bis 20, vorzugsweise 0,2 bis 10 und insbesondere 0,5 bis 5 Gew.% verwendet.

24. Verfahren nach einem der Ansprüche 13 bis 23, dadurch gekennzeichnet, dass die Gel-Bildung durch
a) die Konzentration des mehrwertigen Metallsalzes in der Lösung und/oder
b) durch die Art oder Konzentration des Aktivators
gesteuert wird.

25. Verfahren nach einem der Ansprüche 13 bis 24, dadurch gekennzeichnet, dass zwecks sofortiger Vergelung eine Base zugesetzt wird.

26. Verfahren nach einem der Ansprüche 13 bis 25, dadurch gekennzeichnet, dass den Reaktionskomponenten vor der Vergelung Farbstoffe und/oder Feststoffe zugesetzt werden.

27. Verfahren nach einem der Ansprüche 13 bis 26, dadurch gekennzeichnet, dass man als Aktivator einen Emulgator oder ein Emulgator-Gemisch mit einer HLB-Zahl von > 10 verwendet.

28. Verfahren nach einem der Ansprüche 13 bis 27, dadurch gekennzeichnet, dass man den Aktivator in einer Menge von 0,5 bis 10, vorzugsweise 0,5 bis 5 Gew.% zusetzt.

29. Verwendung des Gels nach Ansprüchen 1 bis 12 zur flüssigkeits- und gasdichten Verfestigung von durchlässigen festen Materialien.

30. Verwendung des Gels nach Ansprüchen 1 bis 12 als mörtelartige Verbundmasse.

**Patentansprüche für den Vertragsstaat: AT**

1. Verfahren zur Herstellung von Gelen aus wasserlöslichen Polymerisaten auf der Basis von Poly(meth)acrylsäure-Derivaten und mehrwertigen Metallsalzen, dadurch gekennzeichnet, dass man entweder

a) die wasserlöslichen Polymerisate in Form von W/Ö-Dispersionen mit wässrigen Lösungen der mehrwertigen Metallsalze oder

b) die wässrigen Lösungen der Polymerisate mit W/Ö-Emulsionen der Metallsalze umsetzt.

2. Verfahren nach Anspruch 1, dadurch gekennzeichnet, dass man die Umsetzung in Gegenwart von Aktivatoren für die Phasenumkehr der W/Ö-Polymerisat-Dispersion bzw. W/Ö-Emulsion des Metallsalzes vornimmt.

3. Verfahren nach Anspruch 1 oder 2, dadurch gekennzeichnet, dass die Reaktionsteilnehmer vor der Umsetzung, gegebenenfalls unter mechanischer Hilfe, vermischt werden.

4. Verfahren nach einem der Ansprüche 1 bis 3, dadurch gekennzeichnet, dass der Aktivator einer der beiden Reaktionskomponenten vor deren Mischungen zugesetzt wird.

5. Verfahren nach einem der Ansprüche 1 bis 4, dadurch gekennzeichnet, dass der Aktivator der Mischung der beiden Reaktionskomponenten zugesetzt wird.

6. Verfahren nach einem der Ansprüche 1 bis 5, dadurch gekennzeichnet, dass W/Ö-Polymerisat-Dispersionen mit einem Gehalt von 10 bis 70, vorzugsweise 10 bis 50 Gew.-% an wasserlöslichen Polymerisaten eingesetzt werden.

7. Verfahren nach einem der Ansprüche 1 bis 6, dadurch gekennzeichnet, dass man Polymerisate aus einem oder mehreren wasserlöslichen Monomeren der aus Acrylsäure, Methacrylsäure und Salzen oder deren Derivaten der Acryl- oder Methacrylsäure bestehenden Gruppe einsetzt.

8. Verfahren nach Anspruch 7, dadurch gekennzeichnet, dass man Polymerisate von wasserlöslichen Estern der Acryl- und/oder Methacrylsäure oder deren Quaternierungs-Produkte einsetzt.

9. Verfahren nach einem der Ansprüche 1 bis 8, dadurch gekennzeichnet, dass man Polymerisate einsetzt, die zu geringen Anteilen, vorzugsweise von 0,1 bis 10 Gew.-%, bezogen auf die Summe aller Monomer-Bestandteile, aus einem oder mehreren nur begrenzt wasserlöslichen Monomeren aus der aus Acrylsäure- oder Methacrylsäureester, Vinylacetat, Vinylpyrrolidon und Acrylnitril bestehenden Gruppe aufgebaut sind.

10. Verfahren nach einem der Ansprüche 1 bis 9, dadurch gekennzeichnet, dass man die Metallsalze von $Al^{3+}$, $Ti^{3+}$, $Cr^{3+}$, $Fe^{2+}$, $Fe^{3+}$, $Ni^{2+}$, $Cu^{2+}$, $An^{2+}$, $La^{3+}$, $Ce^{4+}$, $Pb^{2+}$, $Hg^{2+}$ und/oder $UO_2^{2+}$, vorzugsweise $Al^{3+}$, $Ti^{3+}$, $Cr^{3+}$, $Fe^{2+}$ und/oder $Fe^{3+}$ verwendet.

11. Verfahren nach einem der Ansprüche 1 bis 10, dadurch gekennzeichnet, dass man wässrige Metallsalzlösungen einer Konzentration von 0,01 bis 20, vorzugsweise 0,2 bis 10 und insbesondere 0,5 bis 5 Gew.-% verwendet.

12. Verfahren nach einem der Ansprüche 1 bis 11, dadurch gekennzeichnet, dass die Gel-Bildung durch
a) die Konzentration des mehrwertigen Metallsalzes in der Lösung und/oder
b) durch die Art oder Konzentration des Aktivators
gesteuert wird.

13. Verfahren nach einem der Ansprüche 1 bis 12, dadurch gekennzeichnet, dass zwecks sofortiger Vergelung eine Base zugesetzt wird.

14. Verfahren nach einem der Ansprüche 1 bis 13, dadurch gekennzeichnet, dass den Reaktionskomponenten vor der Vergelung Farbstoffe und/oder Feststoffe zugesetzt werden.

15. Verfahren nach einem der Ansprüche 1 bis 14, dadurch gekennzeichnet, dass man als Aktivator einen Emulgator oder ein Emulgator-Gemisch mit einer HLB-Zahl von >10 verwendet.

16. Verfahren nach einem der Ansprüche 1 bis 15, dadurch gekennzeichnet, dass man den Aktivator in einer Menge von 0,5 bis 10, vorzugsweise 0,5 bis 5 Gew.-% zusetzt.

17. Verwendung des Gels nach Ansprüchen 1 bis 16 zur flüssigkeits- und gasdichten Verfestigung von durchlässigen festen Materialien.

18. Verwendung des Gels nach Ansprüchen 1 bis 16 als mörtelartige Verbundmasse.

**Claims for the contracting states: BE, CH, DE, FR, GB, IT, LI, LU, NL, SE**

1. Gel comprising the reaction products of water-soluble polymers based on poly(meth)acrylic acid derivatives and polyvalent metal salts, characterised in that the gel contains either
a) the reaction products of water-soluble polymers, present in the form of a water/oil dispersion, with aqueous solutions of the metal salts, or
b) the reaction products of aqueous solutions of the polymers with a water/oil emulsion of the metal salts.

2. Gel according to claim 1, characterised in that it contains the reaction products of water/oil dispersions of polymers with metal salt solutions.

3. Gel according to claim 1 or 2, characterised in that it contains the reaction products of one or more water-soluble monomers, selected from the group consisting of acrylic acid, methacrylic acid, and salts and derivatives of acrylic and methacrylic acid, with metal salts.

4. Gel according to claim 3, characterised in that it contains as derivatives of acrylic and/or methacrylic acid the water-soluble esters thereof or the quaternisation products thereof.

5. Gel according to claim 3, characterised in that the polymers are built up from small amounts, preferably from 0.1 to 10% by weight, based on the sum of all the monomer components, of one or more monomers having only limited water-solubility selected from the group consisting of acrylic and methacrylic acid esters, vinyl acetate, vinylpyrrolidone and acrylonitrile.

6. Gel according to one of the preceding claims 1 to 5, characterised in that it contains $Al^{3+}$, $Ti^{3+}$, $Cr^{3+}$, $Fe^{2+}$, $Fe^{3+}$, $Ni^{2+}$, $Cu^{2+}$, $Sn^{2+}$, $La^{3+}$, $Ce^{4+}$, $Pb^{2+}$, $Hg^{2+}$ and/or $UO_2^{2+}$, preferably $Al^{3+}$, $Ti^{3+}$, $Ce^{3+}$, $Fe^{2+}$ and/or $Fe^{3+}$.

7. Gel according to one of claims 1 to 6, characterised in that the proportion of polymer in the reaction product from a water/oil polymer dispersion and an aqueous metal salt solution is from 1 to 40, preferably from 4 to 15, % by weight.

8. Gel according to one of claims 1 to 6, characterised in that the proportion of polymer in the reaction product from an aqueous solution of the polymer with a water/oil emulsion of the metal salt is from 0.1 to 40, preferably from 1 to 30, % by weight.

9. Gel according to one of claims 1 to 8, characterised in that the content of metal salts is from 0.1 to 10, preferably from 0.1 to 5, % by weight.

10. Gel according to one of claims 1 to 9, characterised in that it contains an activator for the phase reversal of the water/oil polymer dispersion or the water/oil metal salt emulsion.

11. Gel according to claim 10, characterised in that the activator comprises an emulsifier or an emulsifier mixture having an HLB number of > 10.

12. Gel according to claim 10 or 11, characterised by a content of activator of from 0.5 to 10, preferably from 0.5 to 5, % by weight.

13. Process for the manufacture of gels from water-soluble polymers based on poly(meth)-acrylic acid derivatives and polyvalent metal salts, characterised in that either
a) the water-soluble polymers are reacted in the form of water/oil dispersions with aqueous solutions of the polyvalent metal salts, or
b) aqueous solutions of the polymers are reacted with water/oil emulsions of the metal salts.

14. Process according to claim 13, characterised in that the reaction is carried out in the presence of activators for the phase reversal of the water/oil polymer dispersion or the water/oil emulsion of the metal salt.

15. Process according to claim 13 or 14, characterised in that the reactants are mixed before the reaction, optionally using a mechanical aid.

16. Process according to one of claims 13 to 15, characterised in that the activator is added to one of the two reaction components before they are mixed.

17. Process according to one of claims 13 to 15, characterised in that the activator is added to the mixture of the two reaction components.

18. Process according to one of claims 13 to 17, characterised in that water/oil polymer dispersions having a content of from 10 to 70, preferably from 10 to 50, % by weight of water-soluble polymers are used.

19. Process according to one of claims 13 to 18, characterised in that polymers from one or more water-soluble monomers selected from the group consisting of acrylic acid, methacrylic acid, and salts and derivatives of acrylic and methacrylic acid are used.

20. Process according to claim 19, characterised in that polymers of water-soluble esters of acrylic and/or methacrylic acid or the quaternisation products thereof are used.

21. Process according to one of claims 13 to 20, characterised in that polymers are used that are built up from small amounts, preferably from 0.1 to 10% by weight, based on the sum of all the monomer components, of one or more monomers having only limited water-solubility selected from the group consisting of acrylic and methacrylic acid esters, vinyl acetate, vinylpyrrolidone and acrylonitrile.

22. Process according to one of claims 13 to 21, characterised in that the metal salts of $Al^{3+}$, $Ti^{3+}$, $Cr^{3+}$, $Fe^{2+}$, $Fe^{3+}$, $Ni^{2+}$, $Cu^{2+}$, $Sn^{2+}$, $La^{3+}$, $Ce^{4+}$, $Pb^{2+}$, $Hg^{2+}$ and/or $UO_2^{2+}$, preferably $Al^{3+}$, $Ti^{3+}$, $Cr^{3+}$, $Fe^{2+}$ and/or $Fe^{3+}$, are used.

23. Process according to one of claims 13 to 22, characterised in that aqueous metal salt solutions having a concentration of from 0.01 to 20, preferably 0.2 to 10, and especially 0.5 to 5, % by weight are used.

24. Process according to one of claims 13 to 23, characterised in that the gel formation is regulated by
a) the concentration of the polyvalent metal salt in the solution and/or
b) the type or concentration of the activator.

25. Process according to one of claims 13 to 24, characterised in that for the purpose of instantaneous gelling a base is added.

26. Process according to one of claims 13 to 25, characterised in that dyestuffs and/or solid matter are added to the reaction components before gelling.

27. Process according to one of claims 13 to 26, characterised in that there is used as activator an emulsifier or an emulsifier mixture having an HLB number of > 10.

28. Process according to one of claims 13 to 27, characterised in that the activator is added in an amount of from 0.5 to 10, preferably from 0.5 to 5, % by weight.

29. Use of the gel according to claims 1 to 12 for consolidating pervious solid materials so that they are impervious to liquids and gases.

30. Use of the gel according to claims 1 to 12 as a mortar-type composite substance.

**Claims for the contracting state: AT**

1. Process for the manufacture of gels from water-soluble polymers based on poly(meth)-acrylic acid derivatives and polyvalent metal salts, characterised in that either
a) the water-soluble polymers are reacted in the form of water/oil dispersions with aqueous solutions of the polyvalent metal salts, or
b) aqueous solutions of the polymers are reacted with water/oil emulsions of the metal salts.

2. Process according to claim 1, characterised in that the reaction is carried out in the presence of activators for the phase reversal of the water/oil polymer dispersion or the water/oil emulsion of the metal salt.

3. Process according to claim 1 or 2, characterised in that the reactants are mixed before the reaction, optionally using a mechanical aid.

4. Process according to one of claims 1 to 3, characterised in that the activator is added to one of the two reaction components before they are mixed.

5. Process according to one of claims 1 to 4, characterised in that the activator is added to the mixture of the two reaction components.

6. Process according to one of claims 1 to 5, characterised in that water/oil polymer dispersions having a content of from 10 to 70, preferably from 10 to 50, % by weight of water-soluble polymers are used.

7. Process according to one of claims 1 to 6, characterised in that polymers from one or more water-soluble monomers selected from the group consisting of acrylic acid, methacrylic acid, and salts and derivatives of acrylic and methacrylic acid are used.

8. Process according to claim 7, characterised in that polymers of water-soluble esters of acrylic and/or methacrylic acid or the quaternisation products thereof are used.

9. Process according to one of claims 1 to 8, characterised in that polymers are used that are built up from small amounts, preferably from 0.1 to 10% by weight, based on the sum of all the monomer components, of one or more monomers having only limited water-solubility selected from the group consisting of acrylic and methacrylic acid esters, vinyl acetate, vinylpyrrolidone and acrylonitrile.

10. Process according to one of claims 1 to 9, characterised in that the metal salts of $Al^{3+}$, $Ti^{3+}$, $Cr^{3+}$, $Fe^{2+}$, $Fe^{3+}$, $Ni^{2+}$, $Cu^{2+}$, $An^{2+}$, $La^{3+}$, $Ce^{4+}$, $Pb^{2+}$, $Hg^{2+}$ and/or $UO_2^{2+}$, preferably $Al^{3+}$, $Ti^{3+}$, $Cr^{3+}$, $Fe^{2+}$ and/or $Fe^{3+}$, are used.

11. Process according to one of claims 1 to 10, characterised in that aqueous metal salt solutions having a concentration of from 0.01 to 20, preferably from 0.2 to 10, and especially from 0.5 to 5, % by weight are used.

12. Process according to one of claims 1 to 11, characterised in that the gel formation is regulated by
a) the concentration of the polyvalent metal salt in the solution and/or
b) the type or concentration of the activator.

13. Process according to one of claims 1 to 12, characterised in that for the purpose of instantaneous gelling a base is added.

14. Process according to one of claims 1 to 13, characterised in that dyestuffs and/or solid matter are added to the reaction components before gelling.

15. Process according to one of claims 1 to 14, characterised in that there is used as activator an emulsifier or emulsifier mixture having an HLB number of >10.

16. Process according to one of claims 1 to 15, characterised in that the activator is added in an amount of from 0.5 to 10, preferably from 0.5 to 5, % by weight.

17. Use of the gel according to claims 1 to 16 for consolidating pervious solid materials so that they are impervious to liquids and gases.

18. Use of the gel according to claims 1 to 16 as a mortar-like composite substance.

**Revendications pour les Etats contractants: BE, CH, DE, FR, GB, IT, LI, LU, NL, SE**

1. Gel, constitué des produits de la réaction de polymères hydrosolubles à base de dérivés d'acide poly(méth)acrylique et de sels de métaux polyvalents, caractérisé en ce qu'il contient:
a) soit les produits de la réaction de polymères hydrosolubles en dispersion eau-dans-huile et de sels de métaux en solution aqueuse,
b) soit les produits de la réaction de polymères en solution aqueuse et de sels de métaux en émulsion eau-dans-huile.

2. Gel suivant la revendication 1, caractérisé en ce qu'il contient les produits de la réaction de polymères en dispersion eau-dans-huile et de sels de métaux en solution.

3. Gel suivant la revendication 1 ou la revendication 2, caractérisé en ce qu'il contient les produits de la réaction d'un monomère hydrosoluble choisi parmi l'acide acrylique, l'acide méthacrylique et les sels ou dérivés de l'acide acrylique ou de l'acide méthacrylique, ou de plusieurs de ces monomères, et de sels de métaux.

4. Gel suivant la revendication 3, caractérisé en ce qu'il contient comme dérivés de l'acide acrylique et (ou) de l'acide méthacrylique des esters hydrosolubles de ceux-ci ou des produits de la quaternisation de ceux-ci.

5. Gel suivant la revendication 3, caractérisé en ce que les polymères renferment des proportions réduites, de préférence entre 0,1 et 10% du poids total de toutes les fractions monomères, d'un ou de plusieurs monomères avec une solubilité limitée dans l'eau, choisi(s) parmi les esters de l'acide acrylique et de l'acide méthacrylique, l'acétate de vinyle, la vinyl-pyrrolidone et le nitrile acrylique.

6. Gel suivant l'une des revendications 1 à 5, caractérisé en ce qu'il contient des ions $Al^{3+}$, $Ti^{3+}$, $Cr^{3+}$, $Fe^{2+}$, $Fe^{3+}$, $Ni^{2+}$, $Cu^{2+}$, $Sn^{2+}$, $La^{3+}$, $Ce^{4+}$, $Pb^{2+}$, $Hg^{2+}$ et(ou) $UO_2^{2+}$, de préférence $Al^{3+}$, $Ti^{3+}$, $Cr^{3+}$, $Fe^{2+}$ et(ou) $Fe^{3+}$.

7. Gel suivant l'une des revendications 1 à 6, caractérisé en ce que, dans le produit de la réaction du polymère en dispersion eau-dans-huile et du sel de métal en solution aqueuse, la proportion du polymère se situe entre 1 et 40 et de préférence entre 4 et 15% en poids.

8. Gel suivant l'une des revendications 1 à 6, caractérisé en ce que, dans le produit de la réaction du polymère en solution aqueuse et du sel de métal en émulsion eau-dans-huile, la proportion du polymère se situe entre 0,1 et 40 et de préférence entre 1 et 30% en poids.

9. Gel suivant l'une des revendications 1 à 8, caractérisé en ce que sa teneur en sels de métaux est comprise entre 0,1 et 10 et de préférence entre 0,1 et 5% en poids.

10. Gel suivant l'une des revendications 1 à 9, caractérisé en ce qu'il contient un activateur pour le transfert des phases de la dispersion eau-dans-huile du polymère ou de l'émulsion eau-dans-huile du sel de métal.

11. Gel suivant la revendication 10, caractérisé en ce que l'activateur est un émulsionnant ou un mélange d'émulsionnants avec une valeur d'équilibre hydro-lipophile (indice HLB) supérieure à 10.

12. Gel suivant l'une des revendications 10 et 11, caractérisé en ce que la teneur en activateur est de 0,5 à 10 et de préférence de 0,5 à 5% en poids.

13. Procédé de préparation de gels constitués de polymères hydrosolubles à base de dérivés de l'acide poly(méth)acrylique et de sels de métaux polyvalents, caractérisé en ce que l'on fait réagir:
a) soit des polymères hydrosolubles sous forme d'une dispersion eau-dans-huile et des sels de métaux polyvalents en solution aqueuse,
b) soit des polymères en solution aqueuse et des sels de métaux en émulsion eau-dans-huile.

14. Procédé suivant la revendication 13, caractérisé en ce que la réaction est réalisée en présence d'activateurs du transfert des phases de la dispersion eau-dans-huile du polymère ou de l'émulsion eau-dans-huile du sel de métal.

15. Procédé suivant l'une des revendications 13 et 14, caractérisé en ce que les partenaires de la réaction sont préalablement mélangés, par exemple par un malaxage mécanique.

16. Procédé suivant l'une des revendications 13 à 15, caractérisé en ce que l'activateur est ajouté à l'un ou à l'autre des partenaires de la réaction avant le mélange de ceux-ci.

17. Procédé suivant l'une des revendications 13 à 15, caractérisé en ce que l'activateur est ajouté au mélange des deux partenaires de la réaction.

18. Procédé suivant l'une des revendications 13 à 17, caractérisé en ce que la dispersion eau-dans-huile du polymère possède une teneur en polymère de 10 à 70 et de préférence de 10 à 50% en poids.

19. Procédé suivant l'une des revendications 13 à 18, caractérisé en ce que le polymère mis en œuvre est un polymère dérivé d'un ou de plusieurs monomères hydrosolubles, choisi(s) parmi l'acide acrylique et l'acide méthacrylique et les sels ou dérivés de ces acides.

20. Procédé suivant la revendication 19, caractérisé en ce que l'on emploie des polymères d'esters de l'acide acrylique et(ou) de l'acide méthacrylique hydrosolubles ou des produits de quaternisation de ceux-ci.

21. Procédé suivant l'une des revendications 13 à 20, caractérisé en ce que l'on emploie des polymères qui contiennent des proportions réduites, de préférence entre 0,1 et 10% du poids total de toutes les fractions monomères, d'un ou de plusieurs monomères avec une solubilité limitée dans l'eau, choisi(s) parmi les esters de l'acide acrylique et de l'acide méthacrylique, l'acétate de vinyle, la vinyl-pyrrolidone et l'acrylo-nitrile.

22. Procédé suivant l'une des revendications 13 à 21, caractérisé en ce que l'on emploie des sels de métaux, fournissant des ions $Al^{3+}$, $Ti^{3+}$, $Cr^{3+}$, $Fe^{2+}$, $Fe^{3+}$, $Ni^{2+}$, $Cu^{2+}$, $Sn^{2+}$, $La^{3+}$, $Ce^{4+}$, $Pb^{2+}$, $Hg^{2+}$ et(ou) $UO_2^{2+}$ et de préférence $Al^{3+}$, $Ti^{3+}$, $Cr^{3+}$, $Fe^{2+}$ et(ou) $Fe^{3+}$.

23. Procédé suivant l'une des revendications 13 à 22, caractérisé en ce que l'on emploie des solutions aqueuses de sels de métaux d'une concentration de 0,01 à 20, de préférence de 0,2 à 10% et en particulier de 0,5 à 5% en poids.

24. Procédé suivant l'une des revendications 13 à 23, caractérisé en ce que la formation du gel est réglée
a) soit par la concentration de la solution en sel de métal polyvalent,
b) soit par la nature de l'activateur ou la concentration de celui-ci.

25. Procédé suivant l'une des revendications 13 à 24, caractérisé en ce que la gélification immédiate est provoquée par l'addition d'une base.

26. Procédé suivant l'une des revendications 13 à 25, caractérisé en ce que, avant la gélification, on ajoute aux partenaires de la réaction des colorants et(ou) des matières solides.

27. Procédé suivant l'une des revendications 13 à 26, caractérisé en ce que l'activateur est un émulsionnant ou un mélange d'émulsionnants avec une valeur d'équilibre hydro-lipophile (indice HLB) supérieure à 10.

28. Procédé suivant l'une des revendications 13 à 27, caractérisé en ce que l'activateur est ajouté en une proportion comprise entre 0,5 et 10 et de préférence entre 0,5 et 5% en poids.

29. Utilisation d'un gel suivant les revendications 1 à 12 pour rendre des matériaux solides perméables étanches aux liquides et aux gaz.

30. Utilisation d'un gel suivant les revendications 1 à 12 comme matière composite du genre mortier ou ciment.

**Revendications pour l'Etat contractant: AT**

1. Procédé de préparation de gels constitués de polymères hydrosolubles à base de dérivés de l'acide poly(méth)acrylique et de sels de métaux polyvalents, caractérisé en ce que l'on fait réagir:
a) soit des polymères hydrosolubles sous forme d'une dispersion eau-dans-huile et des sels de métaux polyvalents en solution aqueuse,
b) soit des polymères en solution aqueuse et des sels de métaux en émulsion eau-dans-huile.

2. Procédé suivant la revendication 1, caractérisé en ce que la réaction est réalisée en présence d'activateurs du transfert des phases de la dispersion eau-dans-huile du polymère ou de l'émulsion eau-dans-huile du sel de métal.

3. Procédé suivant l'une des revendications 1 et 2, caractérisé en ce que les partenaires de la réaction sont préalablement mélangés, par exemple par un malaxage mécanique.

4. Procédé suivant l'une des revendications 1 à 3, caractérisé en ce que l'activateur est ajouté à l'un ou à l'autre des partenaires de la réaction avant le mélange de ceux-ci.

5. Procédé suivant l'une des revendications 1 à 4, caractérisé en ce que l'activateur est ajouté au mélange des deux partenaires de la réaction.

6. Procédé suivant l'une des revendications 1 à 5, caractérisé en ce que la dispersion eau-dans-huile du polymère possède une teneur en polymère de 10 à 70 et de préférence de 10 à 50% en poids.

7. Procédé suivant l'une des revendications 1 à 6, caractérisé en ce que le polymère mis en œuvre est un polymère dérivé d'un ou de plusieurs monomères hydrosolubles, choisi(s) parmi l'acide acrylique et l'acide méthacrylique et les sels ou dérivés de ces acides.

8. Procédé suivant la revendication 7, caractérisé en ce que l'on emploie des polymères d'esters de l'acide acrylique et(ou) de l'acide méthacrylique hydrosolubles ou des produits de quaternisation de ceux-ci.

9. Procédé suivant l'une des revendications 1 à 8, caractérisé en ce que l'on emploie des polymères qui contiennent des proportions réduites, de préférence entre 0,1 et 10% du poids total de toutes les fractions monomères, d'un ou de plusieurs monomères avec une solubilité limitée dans l'eau, choisi(s) parmi les esters de l'acide acrylique et de l'acide méthacrylique, l'acétate de vinyle, la vinyl-pyrrolidone et l'acrylo-nitrile.

10. Procédé suivant l'une des revendications 1 à 9, caractérisé en ce que l'on emploie des sels de métaux, fournissant des ions $Al^{3+}$, $Ti^{3+}$, $Cr^{3+}$, $Fe^{2+}$, $Fe^{3+}$, $Ni^{2+}$, $Cu^{2+}$, $Sn^{2+}$, $La^{3+}$, $Ce^{4+}$, $Pb^{2+}$, $Hg^{2+}$ et(ou) $UO_2^{2+}$ et de préférence $Al^{3+}$, $Ti^{3+}$, $Cr^{3+}$, $Fe^{2+}$ et(ou) $Fe^{3+}$.

11. Procédé suivant l'une des revendications 1 à 10, caractérisé en ce que l'on emploie des solutions aqueuses de sels de métaux d'une concentration de 0,01 à 20, de préférence de 0,2 à 10% et en particulier de 0,5 à 5% en poids.

12. Procédé suivant l'une des revendications 1 à 11, caractérisé en ce que la formation du gel est réglée,
a) soit par la concentration de la solution en sel de métal polyvalent,
b) soit par la nature de l'activateur ou la concentration de celui-ci.

13. Procédé suivant l'une des revendications 1 à 12, caractérisé en ce que la gélification immédiate est provoquée par l'addition d'une base.

14. Procédé suivant l'une des revendications 1 à 13, caractérisé en ce que, avant la gélification, ou ajoute aux partenaires de la réaction des colorants et(ou) des matières solides.

15. Procédé suivant l'une des revendications 1 à 14, caractérisé en ce que l'activateur est un émulsionnant ou un mélange d'émulsionnants avec une valeur d'équilibre hydro-lipophile (indice HLB) supérieure à 10.

16. Procédé suivant l'une des revendications 1 à 15, caractérisé en ce que l'activateur est ajouté en une proportion comprise entre 0,5 et 10 et de préférence entre 0,5 et 5% en poids.

17. Utilisation d'un gel suivant les revendications 1 à 16 pour rendre des matériaux solides perméables étanches aux liquides et aux gaz.

18. Utilisation d'un gel suivant les revendications 1 à 16 comme matière composite du genre mortier ou ciment.